Europäisches Patentamt

European Patent Office

Office européen des brevets

(11) Veröffentlichungsnummer: **0 208 368 B1**

# (12) EUROPÄISCHE PATENTSCHRIFT

(45) Veröffentlichungstag der Patentschrift: **26.05.93**

(21) Anmeldenummer: **86201132.7**

(22) Anmeldetag: **27.06.86**

(51) Int. Cl.5: **C04B 35/46**, C04B 35/48, C04B 35/49, C04B 35/64

(54) Verfahren zur Herstellung keramischer Sinterkörper.

(30) Priorität: **03.07.85 DE 3523681**

(43) Veröffentlichungstag der Anmeldung:
**14.01.87 Patentblatt 87/03**

(45) Bekanntmachung des Hinweises auf die Patenterteilung:
**26.05.93 Patentblatt 93/21**

(84) Benannte Vertragsstaaten:
**BE DE FR GB NL**

(56) Entgegenhaltungen:
DD−A− 153 111
GB−A− 2 096 128
SU−A− 1 058 941
US−A− 4 379 854

(73) Patentinhaber: **Philips Patentverwaltung GmbH**
**Wendenstrasse 35 Postfach 10 51 49**
**W−2000 Hamburg 1(DE)**

(84) Benannte Vertragsstaaten:
**DE**

(73) Patentinhaber: **N.V. Philips' Gloeilampenfa−**
**brieken**
**Groenewoudseweg 1**

**NL−5621 BA Eindhoven(NL)**

(84) Benannte Vertragsstaaten:
**BE FR GB NL**

(72) Erfinder: **Hennings, Detlev, Dr. Dipl.−Chem.**
**Hangstrasse 28**
**W−5100 Aachen(DE)**
Erfinder: **Schreinemacher, Herbert**
**Sittarder Strasse 53**
**W−5100 Aachen(DE)**

(74) Vertreter: **Kupfermann, Fritz−Joachim,**
**Dipl.−Ing. et al**
**Philips Patentverwaltung GmbH Wenden−**
**strasse 35 Postfach 10 51 49**
**W−2000 Hamburg 1 (DE)**

EP 0 208 368 B1

## Beschreibung

Die Erfindung bezieht sich auf ein Verfahren zur Herstellung keramischer Sinterkörper, bei dem dem herzustellenden Sinterkörper entsprechendes Ausgangsmaterial mit einem Zusatz von Verbindungen, die mit dem Ausgangsmaterial eine Schmelzphase bilden, gesintert wird.

Erdalkali − Titanate, Erdalkali − Zirkonate, Erdalkali − Stannate oder Mischkristalle derselben z.B. Aus − gangsmaterialien für den Sinterkörper dienen als Grundmaterial für eine Reihe wichtiger elektronischer Bauelemente, wie z.B. keramische Vielschichtkondensatoren, Korngrenzen − Sperrschichtkondensatoren oder PTC − Widerstände. Sowohl bei derartigen Kondensatoren als auch bei derartigen Widerständen werden die elektrischen Eigenschaften in entscheidendem Ausmaß von der keramischen Mikrostruktur bestimmt. So hängen bei einem solchen keramischen Kondensator die Höhe der Dielektrizitätskonstante und die Temperaturcharakteristik entscheidend von der mittleren Korngröße des keramischen Gefüges ab. Bei z.B. PTC − Widerständen werden die Höhe des Widerstandssprunges und der Kaltwiderstand maßgeb − lich von der mittleren Korngröße und der Homogenität des keramischen Gefüges bestimmt. Bei Korngrenzen − Sperrschichtkondensatoren wird darüberhinaus die Durchschlagfestigkeit bzw. der Isola − tionswiderstand entscheidend über die Korngröße und die Korngrößenverteilung bestimmt. Methoden zur Kontrolle und Beeinflussung der Mikrostruktur der entsprechenden keramischen Sinterkörper sind deshalb von großer Wichtigkeit für die Herstellung der genannten elektronischen Bauelemente.

Die keramische Mikrostruktur, also die mittlere Korngröße und die Homogenität eines keramischen Gefüges, spielt jedoch auch bei anderen keramischen Sinterkörpern als solchen, wie sie für die Herstellung von elektronischen Bauelementen verwendet werden, eine wichtige Rolle. Zu denken ist z.B. an Oxidkera − mik, die für Hochtemperaturprozesse eingesetzt wird, deren Lebensdauer, Festigkeitsverhalten und Tem − peraturwechselbeständigkeit ebenfalls von ihrer keramischen Mikrostruktur bestimmt wird. Dies gilt z.B. auch für Oxidkeramik, für die besonders gute mechanische Eigenschaften erforderlich sind, z.B. Schneid − keramik und für Bauelemente, die im Maschinenbau eingesetzt werden.

Untersuchungen über das Kornwachstum von Bariumtitanat als Ausgangsmaterial für einen keramischen Sinterkörper ergaben, daß Proben mit einem geringen $TiO_2$ − Überschuß oder anderen Zusätzen, die bei einer bestimmten Temperatur mit dem Bariumtitanat eine Schmelzphase bilden, ein diskontinuierliches Kornwachstum, also eine Rekristallisation, oberhalb der eutektischen Temperatur zeigen. Dieses Phänomen gilt für andere Ausgangsmaterialien mit eine Schmelzphase bildenden Zusätzen gleichermaßen. In Bari − umtitanat mit $TiO_2$ − Überschuß wird z.B. die Bildung der Phase $Ba_6Ti_{17}O_{40}$ beobachtet, die mit $BaTiO_3$ bei Temperaturen von 1310 bis 1320 °C eine Schmelzphase bildet. Auch durch andere Zusätze, wie z.B. Phasengemische der Zusammensetzung $CuO − Cu_2O$ mit einem Zusatz eines weiteren Metalloxids, tritt − schon bei Temperaturen um 1050 bis 1200 °C − ein diskontinuierliches Kornwachstum (Rekristallisation) in Bariumtitanat und seinen Mischkristallen auf. Versuche der Anmelderin haben ergeben, daß als Schmelzphase bildende Verbindung auch Phasengemische der Zusammensetzung $CuO.MeO_x$, wobei $MeO_x$ das Oxid mindestens eines Elementes der III., IV., VI., oder VII. Gruppe des Periodischen Systems der Elemente ist, bei Erdalkali − Titanaten, Erdalkali − Zirkonaten, Erdalkali − Stannaten und deren Mischkristallen zu einem vergrößerten Kornwachstum führen.

Das Kornwachstum innerhalb einer Schmelzphase ist, z.B. um elektrische Eigenschaften von Pe − rowskitkeramik zu verbessern, erwünscht. Dieser Prozeß könnte quasi als Kristallzucht aus der Schmelze angesehen werden, die hier im Mikromaßstab in einem keramischen Gefüge durchgeführt wird, wobei sich der Schmelzfluß an den Korngrenzen aufhält und die Mikrokristalle der Keramik einbettet, aber so gut wie nicht in die Kristalle eindringt. Der beschleunigte Diffusionstransport zwischen den Körnern der Pe − rowskitphase kann als Grund für ein vergrößertes Kornwachstum und für ein aktiviertes Sinterverhalten angesehen werden. Eingehende Studien zeigten, daß der Rekristallisationsvorgang in Bariumtitanat durch einen Keimbildungsprozeß initiiert wird. Einzelne Körner wachsen wesentlich schneller als die meisten der sie umgebenden Körner, so daß diese bevorzugten Körner (oder Keime) schließlich durch ihr starkes Wachstum die gesamte Mikrostruktur ausfüllen. Anzahl und Verteilung dieser sogenannten Keime bestim − men die mittlere Korngröße des rekristallisierten Sinterkörpers.

Ein Nachteil bei keramischen Sinterkörpern allgemein, nicht nur bei solchen mit Perowskitstruktur, ist, daß das Kornwachstum statistisch und diskontinuierlich verläuft, und die mittlere Korngröße in einer gewünschten Richtung, also auf einen bestimmten Effekt hin, praktisch nicht beeinflußt werden kann.

Der Erfindung liegt die Aufgabe zugrunde, das eingangs genannte Verfahren so zu verbessern, daß das statistisch und diskontinuierlich verlaufende Kornwachstum rekristallisierender Keramik steuerbar, also eine gewünschte mittlere Korngröße und eine gewünschte Kornverteilung einstellbar wird.

Diese Aufgabe wird erfindungsgemäß dadurch gelöst, daß als Ausgangsmaterial Erdalkali − Titanate, − Zirkonate, − Stannate eingesetzt werden und diesen zur Steuerung des Kornwachstums im Sinterkörper vor der Sinterung mindestens ein Silikat zugesetzt wird, das in einem Temperaturbereich, der der Sintertemperatur entspricht, eine hochviskose und sich daher im sinternden Ausgangsmaterial langsam verteilende Schmelzphase bildet.

Der Erfindung liegt die Erkenntnis zugrunde, daß die Mikrostruktur z.B. von Bariumtitanat hinsichtlich einer gewünschten Kornverteilung und hinsichtlich einer gewünschten mittleren Korngröße beeinflußt werden kann durch Zusätze, die eine so hochviskose Schmelzphase bilden, daß diese sich nur langsam in dem keramischen Material verteilen kann.

Nach einer vorteilhaften Ausgestaltung des Verfahrens nach der Erfindung wird dem Ausgangsmaterial Aluminiumsilikat $Al_4(OH)_8 Si_4 O_{10}$ zugesetzt, das im Temperaturbereich der Sintertemperatur des Ausgangsmaterials eine hochviskose Schmelzphase bildet, die sich nur sehr langsam innerhalb des zu sinternden Korngefüges verteilt und daher das Kornwachstum einzelner Partikel des Ausgangsmaterials innerhalb der Schmelzphase anregt.

Im Zusammenhang mit der Beschreibung des vorliegenden Verfahrens ist unter "Kristallitgröße" die Größe eines monokristallinen Bereiches im Material und unter "Partikelgröße" die Größe von Teilchen, die aus einem oder mehreren Kristalliten gebildet sind, zu verstehen; der Begriff "Korngröße" bezeichnet im vorliegenden Zusammenhang die monokristallinen oder kohärenten Gitterbereiche innerhalb des keramischen Gefüges.

Ausführungsbeispiele der Erfindung werden beschrieben und in ihrer Wirkungsweise erläutert.

Die Rekristallisation von stöchiometrischem Bariumtitanat $BaTiO_3$, das von sich aus bei Sinterung keine Schmelzphase bildet und damit auch keine Rekristallisation zeigt, wurde durch Zusätze von Kaolin $Al_4(OH)_8 Si_4 O_{10}$ bewirkt.

Stöchiometrisches Bariumtitanat $BaTiO_3$ mit einer mittleren Partikelgöße von 0,8 $\mu$m und mit einem atomaren Verhältnis von Ba:Ti = 1:1 wurde über eine Dauer von 6 h bei einer Temperatur von 1350 °C an Luft gesintert und zeigte danach eine mittlere Partikelgröße von 1,8 $\mu$m, d.h., es lag keine Rekristallisation, sondern nur geringes kontinuierliches Kornwachstum vor.

Durch Zusatz von Aluminiumsilikat $Al_4(OH)_8 Si_4 O_{10}$ in Form von Kaolin bildet sich im Kontakt mit $BaTiO_3$ eine zähflüssige silikatische Schmelzphase, die für eine lokale Keimbildung und Rekristallisation des $BaTiO_3$ sorgt.

Stöchiometrischem $BaTiO_3$-Pulver mit einer mittleren Partikelgröße von 0,8 $\mu$m und mit einem atomaren Verhältnis von Ba:Ti = 1:1 wurden Kaolinpartikel $Al_4(OH)_8 Si_4 O_{10}$ einer mittleren Partikelgröße von 1 $\mu$m in Mengen von 1 Gew.%, 3 Gew.% und 5 Gew.% zugesetzt. Diese Pulver wurden kalt isostatisch bei einem Druck von 3,5 kbar zu Körpern einer Abmessung von 6,5 x 6,5 x 16 mm$^3$ verpreßt und jeweils über eine Dauer von 6 h bei einer Temperatur von 1350 °C an Luft gesintert.

Nach dem Zusatz von Kaolin war Rekristallisation und damit eine Beeinflussung der mittleren Korngröße festzustellen; so beträgt die mittlere Korngröße von $BaTiO_3$ nach dem Zusatz von 1 Gew.% Kaolin 30 $\mu$m, nach dem Zusatz von 3 Gew.% Kaolin 22 $\mu$m und nach dem Zusatz von 5 Gew.% Kaolin 12 $\mu$m.

Eine Gegenüberstellung der durch Schmelzphasen beeinflußten Werte für die Korngrößen von $BatiO_3$ nach der Sinterung im Vergleich zur Korngröße vor der Sinterung findet sich in der nachfolgenden Tabelle.

| Material | mittlere Partikel-größe vor der Sinterung ($\mu$m) | mittlere Korngröße nach der Sinterung bei 1350°C ($\mu$m) |
|---|---|---|
| $BaTiO_3$ | 0,8 | 1,8 |
| $BaTiO_3$ + <br> ------ <br> 1Gew.% $Al_4(OH)_8Si_4O_{10}$ | 0,8 <br> ------ <br> 1 | 30 |
| $BaTiO_3$ + <br> ------ <br> 3Gew.% $Al_4(OH)_8Si_4O_{10}$ | 0,8 <br> ------ <br> 1 | 22 |
| $BaTiO_3$ + <br> ------ <br> 5Gew.% $Al_4(OH)_8Si_4O_{10}$ | 0,8 <br> ------ <br> 1 | 12 |

**Patentansprüche**

1. Verfahren zur Herstellung keramischer Sinterkörper, bei dem dem herzustellenden Sinterkörper entsprechendes Ausgangsmaterial mit einem Zusatz von Verbindungen, die mit dem Ausgangsmaterial eine Schmelzphase bilden, gesintert wird,

   dadurch gekennzeichnet, daß als Ausgangsmaterial Erdalkali – Titanate, – Zirkonate, – Stannate eingesetzt werden und diesen zur Steuerung des Kornwachstums im Sinterkörper vor der Sinterung mindestens ein Silikat zugesetzt wird, das in einem Temperaturbereich, der der Sintertemperatur entspricht, eine hochviskose und sich daher im sinternden Ausgangsmaterial langsam verteilende Schmelzphase bildet.

2. Verfahren nach Anspruch 1,
   dadurch gekennzeichnet, daß die Erdalkali – Titanate, – Zirkonate, – Stannate und/oder Mischkristalle derselben eingesetzt werden.

3. Verfahren nach Anspruch 2,
   dadurch gekennzeichnet, daß als Ausgangsmaterial $BaTiO_3$ mit einer Partikelgrößenverteilung im Bereich von 0,1 bis 10 $\mu$m eingesetzt wird.

**4.** Verfahren nach Anspruch 3, <u>dadurch gekennzeichnet,</u> daß Bariumtitanat BaTiO$_3$ mit einer mittleren Partikelgröße von 0,8 $\mu$m eingesetzt wird.

**5.** Verfahren nach Anspruch 1, <u>dadurch gekennzeichnet,</u> daß Aluminiumsilikat Al$_4$(OH)$_8$Si$_4$O$_{10}$ zugesetzt wird.

**6.** Verfahren nach mindestens einem der vorhergehenden Ansprüche,
<u>dadurch gekennzeichnet,</u>
daß die die Schmelzphase bildende(n) Verbindung(en) in einer Menge von 0,1 bis 10 Gew.% des zu sinternden Ausgangsmaterials zugesetzt wird (werden).

**7.** Verfahren nach Anspruch 6,
<u>dadurch gekennzeichnet,</u>
daß die die Schmelzphase bildende(n) Verbindung(en) in einer Menge von 1 bis 5 Gew.% des zu sinternden Ausgangsmaterials zugesetzt wird (werden).

## Claims

**1.** A method of manufacturing ceramic sintered bodies, in which starting material which corresponds to the sintered body to be manufactured and to which compounds are added which form a melting phase with the starting material, is sintered, characterized in that alkaline – earth titanates, alkaline – earth zirconates, alkaline – earth stannates are used as the starting material to which at least one silicate is added for the purpose of controlling the grain growth in the body to be sintered, which silicate forms a melting phase which is highly viscous in a temperature range which corresponds to the sintering temperature and hence disperses relatively slowly in the sintering starting material.

**2.** A method as claimed in Claim 1, characterized in that alkaline – earth titanates, alkaline – earth zirconates, alkaline – earth stannates and/or mixed crystals thereof are used.

**3.** A method as claimed in Claim 2, characterized in that BaTiO$_3$ having a particle – size distribution in the range from 0.1 to 1O $\mu$m is used as the starting material.

**4.** A method as claimed in Claim 3, characterized in that barium titanate BaTiO$_3$ having an average particle size of 0.8 $\mu$m is used.

**5.** A method as claimed in Claim 1, characterized in that aluminium silicate Al$_4$(OH)$_8$Si$_4$O$_{10}$ is added.

**6.** A method as claimed in at least one of the preceding Claims, characterized in that the compound(s) forming the melting phase is (are) added in a quantity from 0.1 to 10 % by weight of the starting material to be sintered.

**7.** A method as claimed in Claim 6, characterized in that the compound(s) forming the melting phase is (are) added in a quantity from 1 to 5 % by weight of the starting material to be sintered.

## Revendications

**1.** Procédé de fabrication de corps frittés céramiques lors duquel est fritté du matériau de départ correspondant au corps fritté à fabriquer auquel on a ajouté des composés constituant une phase de fusion avec le matériau de départ, caractérisé en ce que l'on utilise comme matériau de départ des titanates alcalino – terreux, des zirconates alcalino – terreux et des stannates alcalino – terreux auxquels on ajoute, avant le frittage, afin de régler la croissance des grains dans le corps fritté, un silicate qui dans un domaine de température correspondant à celui de la température de frittage, constitue une phase de fusion très visqueuse qui, de ce fait, se répartit lentement dans le matériau de départ frittant.

**2.** Procédé selon la revendication 1, caractérisé en ce que l'on utilise des titanates alcalino – terreux, des zirconates alcalino – terreux et des stannates alcalino – terreux et/ou des solutions solides de ceux – ci.

**3.** Procédé selon la revendication 2, caractérisé en ce que l'on utilise comme matériau de départ du BaTiO$_3$ dont la grosseur de particule se situe dans le domaine compris entre 0,1 et 10 $\mu$m.

**4.** Procédé selon la revendication 3, caractérisé en ce que l'on utilise du titanate de baryum BaTiO$_3$ dont la grosseur de particule moyenne est égale à 0,8 $\mu$m.

**5.** Procédé selon la revendication 1, caractérisé en ce que l'on ajoute du silicate d'aluminium Al$_4$(OH) $-$ $_8$Si$_4$O$_{10}$.

**6.** Procédé selon au moins l'une des revendications précédentes, caractérisé en ce que le(s) composé(s) constituant la phase de fusion est (sont) ajouté(s) dans une quantité comprise entre 0,1 et 10 % en poids du matériaux de départ à fritter.

**7.** Procédé selon la revendication 6, caractérisé en ce que le(s) composé(s) constituant la phase de fusion est (sont) ajouté(s) dans une quantité comprise entre 1 et 5 % en poids du matériaux de départ à fritter.